# EUROPEAN PATENT APPLICATION

(11) **EP 0 949 817 A2**
(43) Date of publication of application: **13.10.1999**
(21) Application number: 99302578.2
(22) Date of filing: 01.04.1999
(51) Int. Cl.: H04N 7/173

(54) **Video signal transmission apparatus**

(30) Priority: 08.04.1998 KR 9812448
(71) Applicant: SAMSUNG ELECTRONICS CO. LTD., Suwon, Kyungki-do (KR)
(72) Inventor: Kim, Gyu-chool, Gwachun-city, Kyungki-do (KR); Shin, Hyun-kuk, Paldal-gu, Suwon-city, Kyungki-do (KR)
(74) Representative: Robinson, Ian Michael

(57) **Abstract**

A video signal transmission apparatus including a reproducing device (10) which reproduces a video signal from a storage medium and has a plurality of channels, a plurality of image display devices (40) for forming a picture according to the video signal, a switching portion (20) for converting a video signal reproduced by the reproducing device (10) to an optical signal and distributing the optical signal to each of the image display devices (40), a plurality of optical cables (30) for transmitting an optical signal between the switching portion (20) and the image display devices (40), and a controller (50) for controlling the reproducing device (10) and the switching portion (20).

## Description

The present invention relates to a video signal transmitting apparatus for distributing and transmitting a video signal to a plurality of image display devices.

In general, a system for providing a video or audio to passengers is adopted in the passenger compartments of airplanes, trains, or the like. That is, a video reproduced by a reproducing device such as a video on demand (VOD) system is transmitted to and displayed on a small display device installed at the seat of each passenger via a transmission cable.

The video transmission is made by using an electrical cable, so that a transmitted video signal can be distorted by external noises. Particularly, such a noise generated in a transmission line may be an obstacle to the electrical system of an airplane having high performance electrical circuits.

It is an aim of the present invention to provide a video signal transmitting apparatus which can provide a distinct image quality and minimize the influence of electro magnetic interference (EMI).

According to one aspect of the present invention, there is provided a video signal transmission apparatus comprising: a reproducing device which reproduces a video signal from a storage medium and has a plurality of channels; at least one and preferably a plurality of image display devices for forming a picture according to the video signal; a switching portion for converting a video signal reproduced by the reproducing device to an optical signal and distributing the optical signal to each of the image display devices; a plurality of optical cables for transmitting an optical signal between the switching portion and the image display devices; and a controller for controlling the reproducing device and the switching portion.

Preferably, each of the image display devices comprises: a first optical-to-electrical conversion portion for converting an optical signal, which is distributed from the switching portion and transmitted via the optical cable, into an electrical signal; a display device for forming a picture by the electrical signal output from the optical-to-electrical conversion portion; an input device for selecting the channel of the reproducing device; and a first electrical-to-optical conversion portion for converting an electrical signal output from the input device into an optical signal and outputting the optical signal to the switching portion via the optical cable.

Preferably, first electrical-to-optical conversion portion comprises: a driver for generating a driving signal; and a light emitter for generating an optical signal according to the driving signal, and the first optical-to-electrical conversion portion comprises a light receiver for converting an optical signal into an electrical signal.

Preferably, switching portion comprises: a distribution device for selectively distributing and outputting a video signal output from the reproducing device to the image display device; a second optical-to-electrical conversion portion for converting the optical signal transmitted from the first electrical-to-optical conversion portion, into an electrical signal; and a second electrical-to-optical conversion portion for converting the video signal output from the distribution device into an optical signal and transmitting the optical signal to the first optical-to-electrical conversion portion via the optical cable.

For a better understanding of the invention, and to show how embodiments of the same may be carried into effect, reference will now be made, by way of example, to the accompanying diagrammatic drawings, in which:
Figure 1 is a block diagram of a video signal transmitting apparatus according to an embodiment of the present invention;
Figure 2 is a block diagram of the image display device shown in Figure 1; and
Figure 3 is a block diagram of the transmitting and receiving device shown in Figure 1.

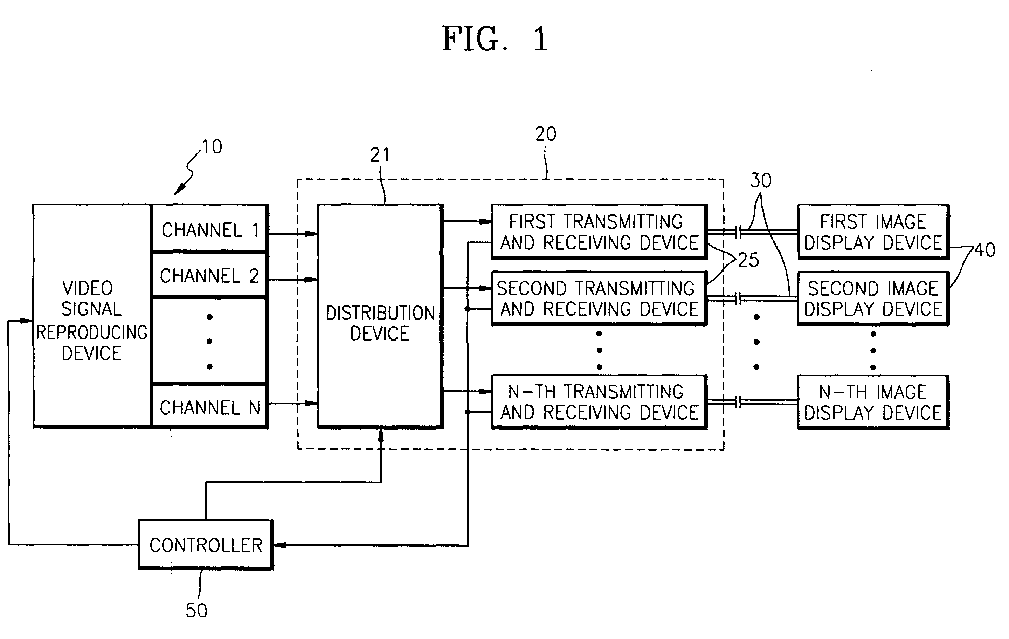

Referring to Figure 1, a video signal transmitting apparatus according to the preferred embodiment of the present invention comprises a reproducing device 10, a switching portion 20, and a plurality of optical cables 30, a plurality of image display devices 40, and a controller 50 for controlling the switching portion 20. Here, the reproducing device 10 reproduces a video signal including an audio signal from a storage medium such as a video tape, a video disc, or the like. The switching portion 20 distributes a video signal reproduced by the reproducing device 10 to each of the image display devices 40, and each of the plurality of optical cables 30 transmits an optical signal between the switching portion 20 and each of the image display devices 40.

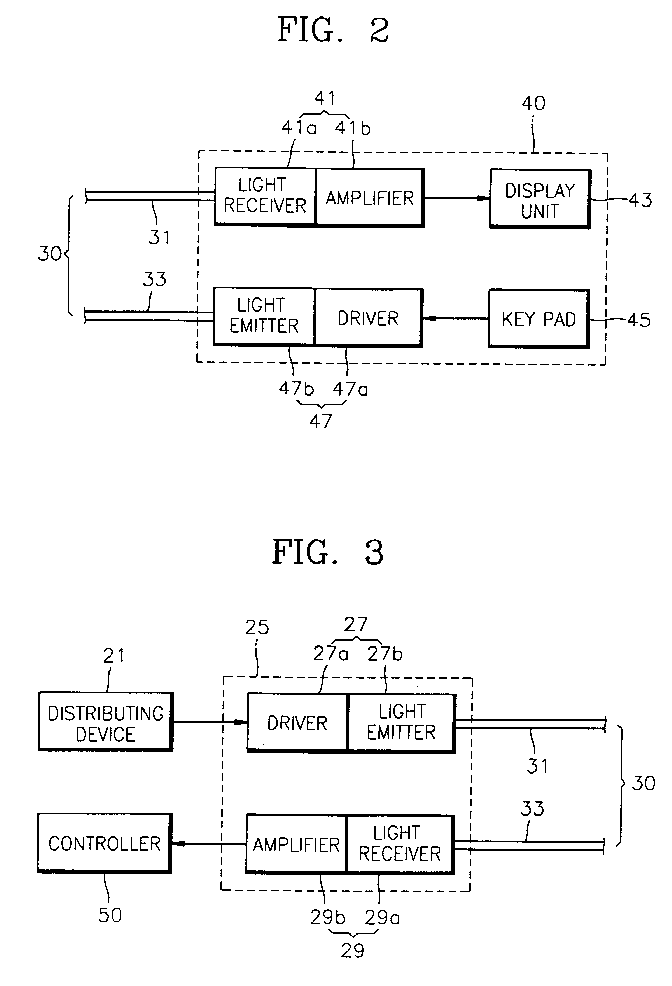

As shown in Figures 2 and 3, the optical cable 30 includes a first optical cable 31 for transmitting a video signal output from the switching portion 20 to the image display device 40, and a second optical cable 33 for transmitting a channel selection signal from each of the image display devices 40 to the switching portion 20.

The reproducing device 10 can independently reproduce a plurality of image media by including a plurality of channels, and the operation thereof is controlled by the controller 50. Alternatively, the reproducing device 10 can comprise a plurality of image reproducers.

The image display device 40 is configured so that a user can select the video signal of a desired channel. For this purpose, as shown in Figure 2, each of the image display devices 40 preferably includes an optical-to-electrical conversion portion 41, a display device 43, a key pad 45, and an electrical-to-optical conversion portion 47. The optical-to-electrical conversion unit 41 converts an optical signal, which is distributed from the switching portion 20 and transmitted via the first optical cable 31, into a video signal. The display device 43 displays a picture by a video signal output from the optical-to-electrical conversion portion 41. The key pad 45 is an input device through which a user can select and input a desired channel. The electrical-to-optical conversion portion 47 converts the selection signal of the key pad 45 into an optical signal and transmits the optical signal to the controller 50. Here, it is preferable that the display device 43 is a flat panel display device.

Also, it is preferable that the image display device 40 further comprises speakers (not shown) for outputting sound.

The switching portion 20, as shown in Figures 1 and 3, includes a distribution device 21 for distributing a video signal reproduced by and output from the reproducing device 10 according to a control signal of the controller 50 and outputting the video signal to the image display device 40, and a plurality of transmitting and receiving devices 25 for converting the distributed video signals into optical signals and outputting the optical signals via the first optical cable 31. The transmitting and receiving devices 25 also convert optical signals transmitted via the second optical cable 33 into electrical signals.

That is, the transmitting and receiving device 25 comprises an optical-to-electrical conversion unit 29, and an electrical-to-optical conversion unit 27. The optical-to-electrical conversion unit 29 converts an optical signal into an electrical signal, the optical signal received via the key pad 45, converted by the electrical-to-optical conversion unit, and transmitted via the second optical cable 33. The electrical-to-optical conversion unit 27 converts the video signal of a predetermined channel distributed by the distribution device 21 into an optical signal. The output signal of the electrical-to-optical conversion unit 27 is transmitted to the image display device 40 via the first optical cable 31.

As shown in Figures 2 and 3, the electrical-to-optical conversion units 27 and 47 in the switching portion 20 and the image display device 40 include drivers 27a and 47a for generating a driving signal according to an input electrical signal, and light emitters 27b and 47b for generating light according to the driving signal, respectively. The optical-to-electrical conversion units 29 and 41 include light receivers 29a and 41a for converting an optical signal into an electrical signal, respectively. Preferably, the optical-to-electrical conversion units 29 and 41 further include amplifiers 29b and 41b for amplifying the converted electrical signal.

The operation of the video signal transmitting apparatus having such a configuration will now be described. A plurality of different storage media are loaded on and reproduced by the reproducing device 10.

When a user selects a desired channel via the key pad 45, a selection signal for the channel is converted into an optical signal by the electrical-to-optical conversion unit 47, and transmitted to the optical-to-electrical conversion unit 29 via the second optical cable 33. The signal is converted into an electrical signal by the optical-to-electrical conversion unit 29 and input to the controller 50. The controller 50 controls the reproducing device 10 and the switching portion 20 so that the video signal of the channel selected by the user can be transmitted to the image display device 40. Thus, the distribution device 21 transmits the video signal of the selected channel to the determined transmitting and receiving device 25, and the video signal is converted into an optical signal by the transmitting and receiving device 25 and transmitted to the image display device 40 via the first optical cable 31. The optical signal transmitted via the first optical cable 31 is converted back into an electrical signal by the optical-to-electrical conversion unit 41 and displayed by the display unit 43.

When at least two users select a video signal of the same channel, the switching portion 20 transmits the same video signal to at least two image display devices 40.

According to the image signal transmitting apparatus described herein, a video signal can even be transmitted a long distance without distortion since it is transmitted via an optical cable. Also, the influences of electro magnetic interference (EMI) can be remarkably reduced.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video signal transmission apparatus comprising:
a reproducing device (10) which reproduces a video signal from a storage medium and has a plurality of channels;
a plurality of image display devices (40) for forming a picture according to the video signal;
a switching portion (20) for converting a video signal reproduced by the reproducing device to an optical signal and distributing the optical signal to each of the image display devices;
a plurality of optical cables (30) for transmitting an optical signal between the switching portion and the image display devices; and
a controller (50) for controlling the reproducing device (10) and the switching portion (20).

2. The video signal transmission apparatus as claimed in claim 1, wherein each of the image display devices (40) comprises:
a first optical-to-electrical conversion portion (41) for converting an optical signal, which is distributed from the switching portion and transmitted via the optical cable, into an electrical signal;
a display device (43) for forming a picture by the electrical signal output from the optical-to-electrical conversion portion;
an input device (45) for selecting the channel of the reproducing device; and
a first electrical-to-optical conversion portion (47) for converting an electrical signal output from the input device into an optical signal and outputting the optical signal to the switching portion via the optical cable.

3. The video signal transmission apparatus as claimed in claim 2, wherein the first electrical-to-optical conversion portion (47) comprises:
a driver (47a) for generating a driving signal; and
a light emitter (47b) for generating an optical signal according to the driving signal; and
wherein the first optical-to-electrical conversion portion (41) comprises:
a light receiver (41a) for converting an optical signal into an electrical signal.

4. The video signal transmission apparatus as claimed in claim 2 or 3, wherein the switching portion (20) comprises:
a distribution device (21) for selectively distributing and outputting a video signal output from the reproducing device (10) to the image display device (40);
a second optical-to-electrical conversion portion (29) for converting the optical signal transmitted from the first electrical-to-optical conversion (47) portion, into an electrical signal; and
a second electrical-to-optical conversion portion (27) for converting the video signal output from the distribution device (21) into an optical signal and transmitting the optical signal to the first optical-to-electrical (41) conversion portion via the optical cable (30).

5. The video signal transmission apparatus as claimed in claim 4, wherein the second electrical-to-optical conversion portion (27) comprises:
a driver (27a) for generating a driving signal; and
a light emitter (27b) for generating an optical signal according to the driving signal; and
wherein the second optical-to-electrical conversion portion comprises:
a light receiver (29a) for converting an optical signal into an electrical signal.

6. The video signal transmitting apparatus as claimed in any of claims 1 to 5, wherein the optical cable (30) comprises:
a first optical cable (31) for transmitting the optical signal output from the switching portion (20) to the image display device (40); and
a second optical cable (33) for transmitting a channel selection signal of the image display device (40) to the switching portion (20).
